# EUROPEAN PATENT APPLICATION

(11) **EP 2 106 179 A1**
(43) Date of publication of application: **30.09.2009**
(21) Application number: 08380102.7
(22) Date of filing: 27.03.2008
(51) Int. Cl.: H04W 28/16

(54) **Call admission control method for preventing the congestion in the Abis interface in a mobile telecommunication system**

(71) Applicant: Vodafone Group PLC, Newbury Berkshire RG14 2FN (GB)
(72) Inventor: Güemes Cabrejas, Inigo, 28050 Madrid (ES); Arranz Arauzo, Miguel, 28050 Madrid (ES); Gomez Coloma, Alberto, 28050 Madrid (ES)
(74) Representative: Carvajal y Urquijo, Isabel

(57) **Abstract**

Call admission control method for preventing the congestion in the Abis interface in a mobile telecommunication system, comprising: estimating (S1) the transmission bandwidth required by a service a user is requesting (S0), by means of consulting a bandwidth per service table; checking (S2) the available transmission bandwidth; comparing (S3) the available bandwidth with required bandwidth: if available bandwidth is greater than required bandwidth, adjusting (S4) available bandwidth and granting (S5) access to said service; otherwise, checking (S6) if there is a flow control mechanism implemented in the system and has not been triggered yet: in this case, activating (S7) the flow control mechanism to free additional transmission resources and going back to step of checking (S2) the available transmission bandwidth; on the contrary, denying access to said service.

## Description

### Field of the invention

The present invention lies in the field of mobile communications, and more specifically in providing a set of techniques to manage congestion in the Abis interface according to GSM standards.

### Background of the invention

In a mobile telecommunication system, several interfaces are defined to interconnect the different nodes of the system. In the case of the GSM standards, the Abis interface is defined to interconnect the Base Transceiver Station (BTS) and the Base Station Controller (BSC).

This Abis interface is defined over a transmission network that will transport all the traffic between the BTS and the BSC. This transmission network can be implemented with different technologies (microwave, DSL, etc.) and topologies (tree, star, ring, etc.), and will have a limited capacity, i.e. will provide the Abis with a limited amount of transmission resources.

Those transmission resources have to be allocated to the different users accessing the system, in order to transport the user traffic from the BTS to the BSC, and equally from the BSC to the BTS. Additionally some resources are required to transport the system signalling.

In the classical Abis resource allocation strategy, transmission resources are allocated statically (i.e. are reserved regardless they are later used or not) in a time slot basis according to the maximum bandwidth the user may need. In other words, resources are allocated assuming the user will make a 100% usage of resources, i.e. will have a 100% Activity Factor.

This inefficient usage of resources can be partially solved with Abis Compression or Optimization techniques, where Abis resource is allocated according to real Activity Factor (typically 65% for voice and ∼20% for data). However, with such implementation (also known as "Best Effort resource allocation"), there is no protection at all against congestion, and with no proper control of in-coming calls, system will collapse with any traffic burst.

Although solutions for other systems (e.g. 3G) exist, they can not be applied to Abis, due to the different approach to allocation and call handling strategies, and particular Abis behaviour in a congestion situation. Therefore, a new solution is required, targeting specific Abis implementation details and strategies, handling 2G specific traffic patterns, and addressing Abis specific weaknesses.

US patent US2002/0003783 A1 describes a method for allocating Abis interface transmission challenge, but this patent does not include any mechanism or technique to deal with congestion.

European patent EP1814340 A1 describes a method for optimized assignment of Abis transmission resources based on dynamic statistical time division multiplexing. But this patent does not provide any mechanism to control users accessing the system, and does not describe a solution targeting voice and data services interaction.

US patent US2007/0211753 A1 describes a method for saving bandwidth on certain interfaces in a telecommunication system. In particular, it proposes the usage of a low code rate for voice calls in case of Abis congestion or overload. But this patent describes only one particular technique applicable to only one service (voice) and with a number of limitations (e.g. requires terminal support of AMR-HR codecs).

### Summary of the invention

The invention relates to a call admission control method for preventing the congestion in the Abis interface in a mobile telecommunication system according to claim 1. Preferred embodiments of the method are defined in the dependent claims.

This invention provides a mechanism to manage and prevent congestion in the Abis interface. The idea is to control the users accessing the system, so that access is granted to a new user, or a new service is approved for an already connected user, only if the system is not in an Abis congestion situation, and the traffic that will be generated by the new user/service will not take the system to a congestion situation.

The invention will apply to any service (e.g. voice, Interactive/Background data...) carried over a GSM network, and will be independent of the particular transmission technology (e.g. microwave, DSL,..) or topology used to transport the Abis interface.

The method comprises the following steps:
- estimating the transmission bandwidth required by a service a user is requesting;
- checking the available transmission bandwidth;
- comparing the available bandwidth with required bandwidth:
   - if available bandwidth is greater than required bandwidth:
      - adjusting available bandwidth;
      - granting access to said service;
   - if available bandwidth is not greater than required bandwidth:
      - checking if there is a flow control mechanism implemented in the system and has not been triggered yet:

   - in this case, activating the flow control mechanism to free additional transmission resources and going back to step of checking the available transmission bandwidth;
   - on the contrary, denying access to said service.

The step of estimating the transmission bandwidth required by a service is preferably carried out by means of consulting a bandwidth per service table.

### Brief description of the drawings

To complete the description and in order to provide for a better understanding of the invention, a set of drawings is provided. Said drawings form an integral part of the description and illustrate preferred embodiments of the invention, which should not be interpreted as restricting the scope of the invention, but just as examples of how the invention can be embodied. The drawings comprise the following figures:
Figure 1 represents a block diagram with the elements from a GSM system in the scope of the invention: BTS, BSC and Abis interface.
Figure 2 shows a flowchart for a preferred embodiment of the call admission control method, describing all different steps and decisions taken since a user accesses the system (or an already connected user requests a new service) until access is granted or rejected.

### Detailed description of the preferred embodiments

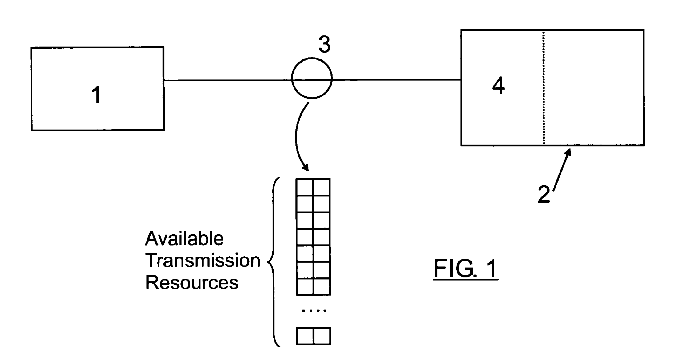

As shown in **Figure 1****,** every BTS 1 (or group of BTSs sharing a transmission path) is connected to a BSC 2 over an Abis interface 3. This Abis interface 3 will have assigned a finite amount of transmission resources, also known as Abis bandwidth.

A transmission resources pool is defined comprising all available Abis bandwidth, and a Call Admission Control Entity 4 is defined at the BSC 2 in order to administer the access of the users to this pool of resources.

A "bandwith per service" table is defined containing the information of the average number of transmission resources that are required for all different services supported by the system. This "bandwidth per service" table is the core of the call admission control method. It is defined by the operator, so the method can be tuned to the multiple scenarios, environments and traffic profiles that are possible in a real network.

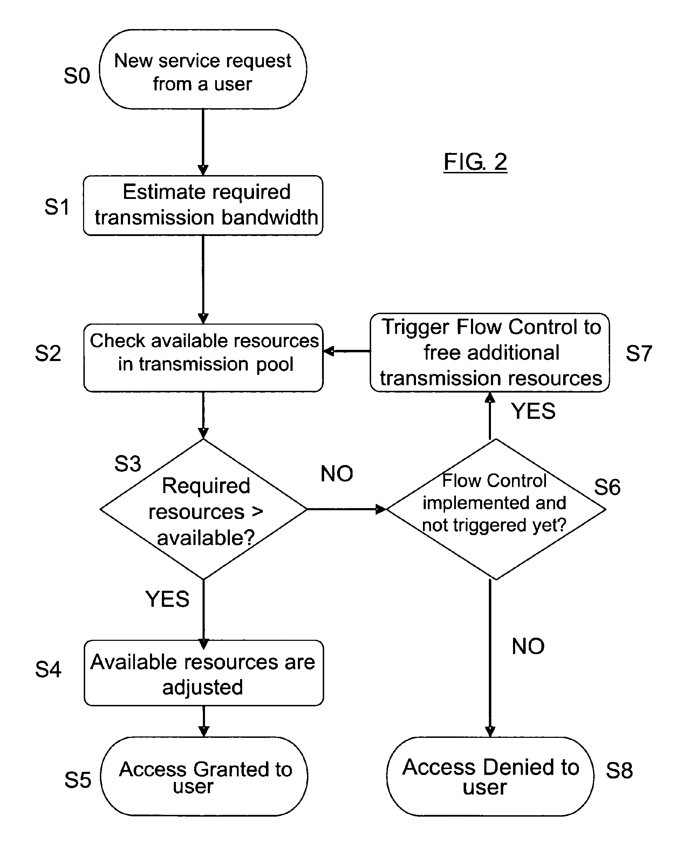

**Figure 2** illustrates the call admission control process, followed whenever a new or an already connected user requests a call establishment for any kind of service (S0).

First, the Call Admission Control Entity 4 estimates (S1) the transmission bandwidth that will be required by this user, looking for the user requested service at the "bandwidth per service table".

Next, the Call Admission Control Entity 4 checks (S2) how many transmission resources are not in use (i.e. are not allocated to any other user) and therefore are available for the new user.

A decision is taken (S3) by Call Admission Control Entity 4 : if available bandwidth is greater than requested bandwidth, available bandwidth will be decreased (S4) in the same amount as required for the new service, the required resources are substracted from the pool, and the user will be granted access (S5).

In case available bandwidth is lower than required bandwidth, the Call Admission Control Entity 4 will take another decision (S6). If a flow control mechanism is implemented in the system, and has not been triggered yet, it will be activated in order to free additional transmission resources (S7), and the Call Admission Control Entity 4 will perform again the resource availability check (S2) considering the new freed available resources.

If such a mechanism is not available, or it has already been triggered unsuccessfully, the call request will be rejected, and access will be denied to the user with cause "Abis Congestion" (S8).

Different call admission control strategies are available for the operator, according to the desired level of protection against Abis congestion. In case a conservative usage of resources is desired, in order to minimize the probability of congestion (thus protecting user Quality of Service), values used in the "bandwidth per service" table should be close to the maximum bandwith possible for the different services. On the other hand, if an aggressive strategy is preferred, in order to optimize transmission efficiency, values in this table should be closer to the minimum bandwith required per service.

Even a most aggressive strategy is possible assigning a value of 0 resources required for any service; this will imply that no user will be prevented from entering the system, regardless the congestion situation.

Different priorities per service can also be applied, applying aggressive or conservative strategies to the different services according to the desired priority.

## Claims

1. Call admission control method for preventing the congestion in the Abis interface in a mobile telecommunication system, **characterized in that** the method comprises the following steps:
- estimating (S1) the transmission bandwidth required by a service a user is requesting (S0);
- checking (S2) the available transmission bandwidth;
- comparing (S3) the available bandwidth with required bandwidth:
• if available bandwidth is greater than required bandwidth:
- adjusting (S4) available bandwidth;
- granting (S5) access to said service;
• if available bandwidth is not greater than required bandwidth:
- checking (S6) if there is a flow control mechanism implemented in the system and has not been triggered yet:
• in this case, activating (S7) the flow control mechanism to free additional transmission resources and going back to step of checking (S2) the available transmission bandwidth;
• on the contrary, denying access to said service.

2. Call admission control method according to claim 1, **characterized in that** the step of estimating (S1) the transmission bandwidth required by a service is carried out by means of consulting a bandwidth per service table.
